(19) Europäisches Patentamt / European Patent Office / Office européen des brevets

(11) **EP 1 676 041 B1**

(12) **EUROPEAN PATENT SPECIFICATION**

(45) Date of publication and mention
of the grant of the patent:
**20.06.2007 Bulletin 2007/25**

(21) Application number: **04774971.8**

(22) Date of filing: **27.09.2004**

(51) Int Cl.:
*F16C 33/66* (2006.01)     *F16N 29/00* (2006.01)
*G01B 7/14* (2006.01)     *G01M 13/04* (2006.01)

(86) International application number:
**PCT/NL2004/000669**

(87) International publication number:
**WO 2005/033535 (14.04.2005 Gazette 2005/15)**

(54) **METHOD AND APPARATUS FOR MEASURING THE THICKNESS OF A LUBRICATION FILM BETWEEN SURFACES**

VERFAHREN UND VORRICHTUNG ZUM MESSEN DER DICKE EINES SCHMIERFILMS ZWISCHEN FLÄCHEN

PROCEDE ET APPAREIL POUR MESURER L'EPAISSEUR D'UN FILM LUBRIFIANT ENTRE DES SURFACES

(84) Designated Contracting States:
**AT BE BG CH CY CZ DE DK EE ES FI FR GB GR HU IE IT LI LU MC NL PL PT RO SE SI SK TR**

(30) Priority: **03.10.2003 NL 1024450**

(43) Date of publication of application:
**05.07.2006 Bulletin 2006/27**

(73) Proprietor: **AB SKF**
**415 59 Göteborg (SE)**

(72) Inventors:
• **MOL, Hendrik, Anne**
**NL-4254 XG Sleeuwijk (NL)**
• **HOLSNIJDERS, Jozef, Johannes**
**NL-4142 EN Leerdam (NL)**

(74) Representative: **Burö, Sven Peter**
**SKF Research & Development**
**Company B.V.**
**P.O. Box 2350**
**NL-3430 DT Nieuwegein (NL)**

(56) References cited:
**EP-A- 0 021 524**     **EP-A- 0 288 940**
**WO-A- 87/03053**     **US-A- 4 511 837**
**US-A- 4 728 943**

**Description**

The present invention relates to a method for determining the thickness of a lubrication film in a bearing by measuring a capacitance, where the lubrication film is provided between a first member and a plurality of bearing roller elements and between a second member and the plurality of bearing roller elements, the first member and the second member being moveable with respect to each other. The invention further relates to an apparatus for determining the thickness of a lubrication film.

EP 0 021 524 A1 describes a device for measuring the thickness of a lubrication film between two surfaces that roll or slide relative to each other. The document describes a ball bearing in which an inner and an outer ring are rotatably positioned with respect to each other. In between the inner and outer ring a plurality of balls is placed to guide the relative movement of the inner and outer ring. To ensure an optimal guidance and to reduce friction and frictional wear, a lubricant is provided at the contact surfaces of the inner ring and the balls, and the balls and the outer ring.

In order to monitor the ball bearing, the thickness of the lubrication film between the different components of the ball bearing is measured. A low thickness of the lubrication film could result in friction or even frictional wear. Also, the contact time of components of the ball bearing during a certain interval can be measured.

The thickness of the lubricant is measured by measuring the capacitance occurring between the lubricated surfaces. According to EP 0 021 524 A1, this is done by measuring the capacitance $C_b$ between the inner and the outer ring. In case n balls are provided in between the inner and the outer ring, and $C_{in}$ is the capacitance between the $n^{th}$ ball and the inner ring, and $C_{on}$ is the capacitance between the $n^{th}$ ball and the outer ring, the total capacitance of the ball bearing is given by:

$$C_b = \sum_n \frac{C_{in} * C_{on}}{C_{in} + C_{on}} \,.$$

The measured value of the capacitance $C_b$ provides information about the amount of lubricant present between the balls and the inner and outer ring of the ball bearing. However, the measured value of $C_b$ provides no information about the amount of lubricant present between a certain ball and the inner and outer ring of the ball bearing. In case eight balls are present between the inner and outer ring and seven of them have a sufficient amount of lubrication, but only the $8^{th}$ ball has a lack of lubrication, this will not easily be retrieved from the measured total capacitance $C_b$. And in case the lack of lubrication on the $8^{th}$ ball results in a measurable change of the capacitance $C_b$, no information can be obtained about what ball(s) need more lubrication.

Since the capacitance $C_b$ is measured between the inner and the outer ring of the ball bearing, electrical isolation is needed of the ball bearing with respect to the housing and/or the shaft. If the ball bearing is not properly isolated, the capacitance of the whole system is determined, instead of only the contribution of the lubricant.

Further on, in most cases more than one bearing is used in a mechanical construction. The ball bearing should therefore also be isolated from the other bearing(s), otherwise the capacitance of those bearings is also measured.

Object of the invention is to provide a method and apparatus that is capable of measuring the amount of lubrication between one or more balls. In order to obtain this object, the invention provides a system as defined in the outset, characterised in that the capacitance is measured between a first measurement node on a first of the plurality of bearing roller elements and a second measurement node on a further one of the plurality of bearing roller elements. By measuring the capacitance between first and a second bearing roller elements, information can be obtained about the thickness of the lubrication film present between the first and second bearing roller elements and the first and second member. The lubrication film may advantageously be an oil film. The bearing roller elements may be provided by balls or cylindrically shaped rollers. The first and second member may substantially be flat or shaped as at least a part of a cylinder.

According to a further embodiment of the present invention, the first bearing roller element and the further bearing roller element are coaxially aligned, mechanically coupled and electrically isolated with respect to each other. Such a method allows the thickness of a lubrication film to be measured, for instance, of a cylindrically shaped roller. In order to do so, a single roller can therefore be divided in two parts, forming the first and the further bearing roller element.

According to a further embodiment of the present invention, the capacitance is measured using sliding contacts for making contact with the first and second measurement nodes. Sliding contacts can advantageously be used to establish an electrical connection to a rotating and/or translating element.

According to a further embodiment of the present invention, the capacitance is only measured during time periods in which the sliding contacts are in actual electrical connection with the first and second measurement node. A relative movement of the first member with respect to the second member will cause the roller elements to perform a rotational, as well as a translational movement. The roller elements may for that reason be provided with contact plates that are, as a result of the movement, only temporarily in contact with the sliding contact. Measurement can therefore only be done during contact.

According to a further embodiment of the present invention, an inductance L is connected between the first and second measurement nodes, and the capacitance is measured using an electromagnetic oscillating field. This can be done wireless, for instance using principles known from security gates or ID-tags. Such a LC-circuitry allows to determine the capacitance by applying a frequency sweep.

According to a further aspect, the present invention relates to an apparatus for determining the thickness of a lubrication film in a bearing by measuring a capacitance, where the lubrication film is provided between a first member and a plurality of bearing roller elements and between a second member and the plurality of bearing roller elements, the first member and the second member being moveable with respect to each other, characterised in that the apparatus comprises a measuring device for measuring the capacitance between a first measurement node on a first of the plurality of bearing roller elements and a second measurement node on a further one of the plurality of bearing roller elements.

According to a further embodiment of the present invention, the first bearing roller element and the further bearing roller element are coaxially aligned, mechanically coupled and electrically isolated with respect to each other.

According to a further embodiment of the present invention the apparatus comprises sliding contacts for making contact between the measurement apparatus and the first and second measurement nodes.

According to a further embodiment of the present invention, the measurement device only measures the capacitance during time periods in which the sliding contacts are in actual electrical connection with the first and second measurement node.

According to a further embodiment of the present invention, the apparatus further comprises an inductance L connected between the first and second measurement nodes, and the measurement device uses an electromagnetic oscillating field for measuring the capacitance.

According to a further embodiment of the present invention, the apparatus is further provided with a power supply, for energizing the measuring device. The measurement device for measuring the capacitance needs to be energized in order to work. Therefore, it is preferred to provide the apparatus according to the invention with a power supply.

According to a further embodiment of the present invention, the measurement device is provided with transmission means, for transmitting the measured data. The data measured by the measurement device needs to be transmitted in order to be further processed. Therefore, it is preferred to provide the apparatus according to the invention with transmission means.

The invention will be explained using exemplary embodiments with reference to some drawings which are only intended to illustrate the present invention and not to limit its scope which is only limited by the appended claims.

Figures 1a and 1b schematically show a first embodiment of the invention;
Figures 2a and 2b schematically show a second embodiment of the invention.

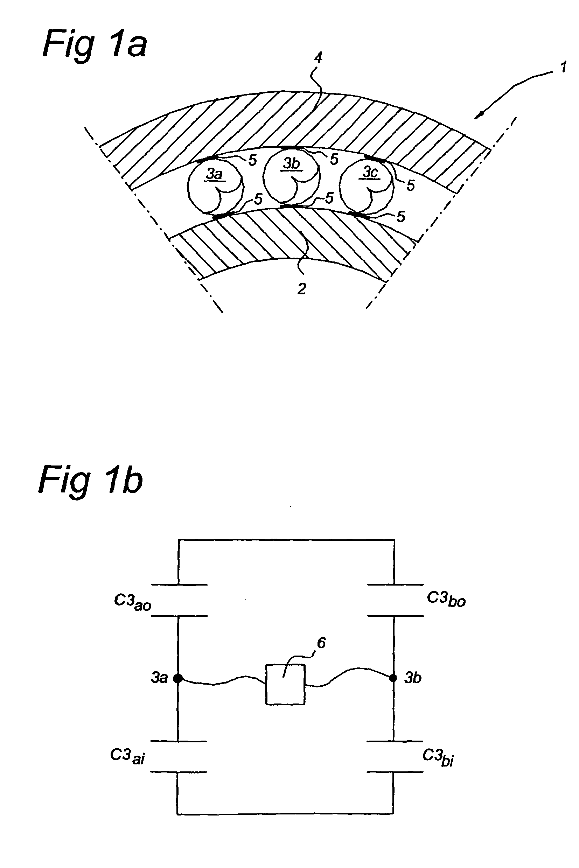

Fig. 1a shows a ball bearing 1 comprising an inner ring 2, that is rotatably with respect to an outer ring 4. The ball bearing 1 can, for instance, be used as a bearing for a shaft. In between the inner ring 2 and the outer ring 4 a plurality of balls 3a, 3b, 3c... is provided. In order to reduce the friction and friction wear between the inner ring 2 and the balls 3, and the balls 3 and the outer ring 4, a lubricant 5, for instance an oil film, is provided.

In order to guarantee an optimal performance of the ball bearing 1, the amount of lubrication between the balls 3 and the inner and outer ring 2, 4 needs to be monitored. If the lubrication film becomes too thin, the friction between the components becomes too high, having a negative effect on the performance of the ball bearing 1. Also, direct contact could occur between the balls 3 and the inner and outer ring 2, 4, causing damage of these components. Therefore, it is preferred to monitor the amount of lubrication between the balls 3 and the inner and outer ring 2, 4.

The thickness of the lubrication film also influences the electrical capacitance of the system. According to this embodiment, the capacitance $C_{3ab}$ is measured between a first ball 3a and a second ball 3b. This capacity $C_{3ab}$ is built up of two components:

1) the capacitance between the first ball 3a and the second ball 3b via the inner ring 2, and
2) the capacitance between the first ball 3a and the second ball 3b via the outer ring 4.

If $C_{3ao}$ is the capacitance between the first ball 3a and the outer ring, $C_{3ai}$ the capacitance between the first ball 3a and the inner ring, $C_{3bo}$ the capacitance between the second ball 3b and the outer ring, $C_{3bi}$ the capacitance between the second ball 3b and the inner ring, then the capacitance $C_{3ab}$ between the first ball 3a and the second ball 3b is given by:

$$C_{3ab} = \frac{C_{3ao} * C_{3bo}}{C_{3ao} + C_{3bo}} + \frac{C_{3ai} * C_{3bi}}{C_{3ai} + C_{3bi}}.$$

Figure 1b shows the electrical equivalent of the situation of Fig. 1a. The capacitance $C_{3ab}$ is measured between the nodes indicated by 3a and 3b in Fig. 1b. In order to determine the capacitance $C_{3ab}$, a capacitance measurement device 6 needs to be provided. This capacitance measurement device can be provided in several ways. For instance, a capacitance measurement device 6 could be provided inside one of the balls 3a. The capacitance measurement device 6 can be connected to the other ball 3b by means of a slip ring (not shown).

Also, the measurement device 6 can be attached to the "fixed world", or to the inner or outer ring 2,4, measuring the capacitance by connecting to the nodes 3a and 3b, for instance, by slip contacts. The roller elements 3 can be provided with contact plates (not shown). In case the slip contacts only make contact with the contact plates during a certain phase of the rotation of the roller elements, the capacitance can only be measured during contact.

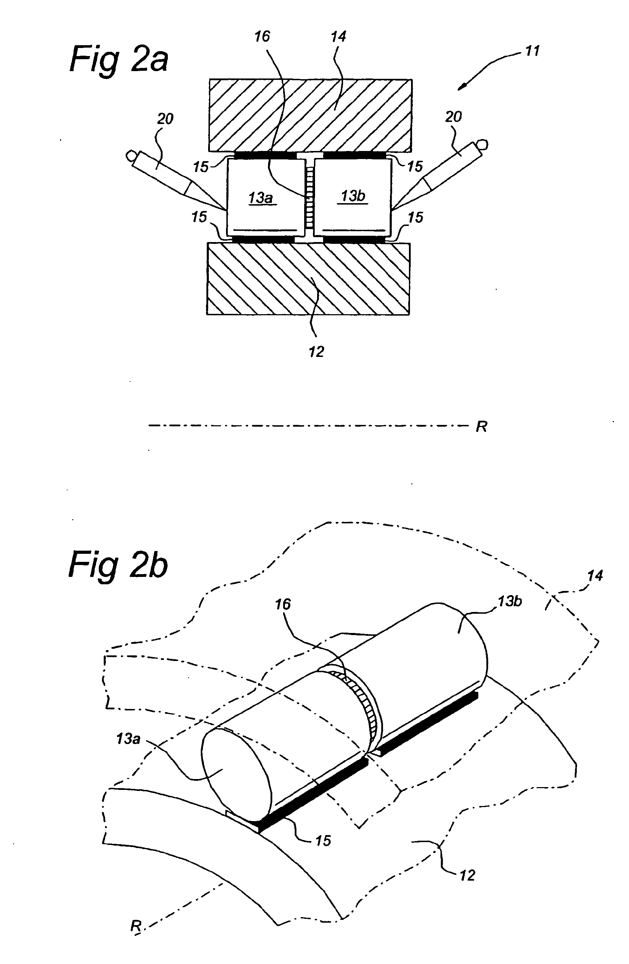

Figure 2a and 2b show an alternative embodiment of the present invention, where Fig. 2a shows a schematic cross sectional view of a roller bearing 11 and Fig. 2b shows a schematic perspective view of the roller bearing 11. The roller bearing comprises an inner ring 12 and an outer ring 14, that are rotatably mounted with respect to each other, and can rotate around rotational axis R. In between the inner and the outer ring 12, 14, one or more rollers 13 can be provided, of which only one is shown in the Figures 2a and 2b. In between the roller 13 and the inner and outer ring 12, 14, a lubrication film 15 is provided. As can be seen in the Figures 2a and 2b, the roller 13 is divided in a first roller part 13a and a second roller part 13b. This enables capacitance measurements between the first and the second roller part 13a, 13b. The first and second roller parts 13a, 13b are coaxially aligned, mechanically coupled and electrically isolated with respect to each other. An isolating part 16 is provided in between the first and the second roller part 13a, 13b.

By dividing a single roller part 13 in two separate pieces 13a, 13b, a capacitance measurement can be applied to one roller 13, to determine the capacitance $C_{13ab}$ between the first roller part 13a and the second roller part 13b. As a result of that, information can be obtained about the amount of lubrication present between a single roller 13 and the inner and outer ring 12, 14. According to this embodiment, the capacitance $C_{13ab}$ is measured between a first roller part 13a and a second roller part 13b. This capacity $C_{13ab}$ is built up of two components:

    1) the capacitance between the first roller part 13a and the second roller part 13b via the inner ring 12, and
    2) the capacitance between the first roller part 13a and the second roller part 13b via the outer ring 14.

If $C_{13ao}$ is the capacitance between the first roller part 13a and the outer ring 14, $C_{13ai}$ the capacitance between the first roller part 13a and the inner ring 12, $C_{13bo}$ the capacitance between the second roller part 13b and the outer ring 14, $C_{13bi}$ the capacitance between the second roller part 13b and the inner ring 12, then the capacitance $C_{13ab}$ between the first roller part 13a and the second roller part 13b is given by:

$$C_{13ab} = \frac{C_{13ao} * C_{13bo}}{C_{13ao} + C_{13bo}} + \frac{C_{13ai} * C_{13bi}}{C_{13ai} + C_{13bi}}.$$

The measurement device (not shown in Figures 2a and 2b) that measures the capacitance may be connected to the slip contacts 20 shown in Fig. 2a. Alternatively, the measurement device may be integrated inside the roller 13.

It will be understood by a person skilled in the art that roller 13 as depicted in Fig. 2a and 2b can also be formed by a single one part roller 13, that is made of a isolating material, for instance a ceramic material, where the roller 13 is provided with two conductive parts, e.g. a coating layer. The roller 13 can also be formed by a conductive material, for instance steel, provided with an isolating coating. On the isolating coating two conductive parts can be placed. In both cases, the conductive parts need to be in contact with the lubrication film and the slip contacts 20.

Of course, the invention could also be applied to other configurations. For instance, instead of an inner ring 2, 12 and an outer ring 4, 14, the balls 3 or rollers 13 could also be positioned between two substantially equally shaped surfaces, such as flat surfaces, that are moveable with respect to each other.

Both the embodiments discussed above with reference to Fig. 1a, 1b, 2a and 2b need a power supply (not shown), for instance a battery or the like, to energize the measurement device 6. In case the measurement device 6 is formed as a part of the balls 3 or the roller 13, the power supply can be attached to the outside, non rotating, world. Also, the power supply can provided inside the ball 3 or the roller 13. In a preferred embodiment the power supply is a power generating device, that generates power from the rotating movement of the ball 3 or roller 13.

The balls 3 and/or the rollers 13 may be formed as a hollow structure. Inside the hollow structure equipment can be positioned. This may be the measuring device 6, a power supply, a power generating device or a combination of these elements. It is also possible to provide a measurement device inside the balls 3 and/or rollers 13 to measure the load working on the balls 3 and/or the rollers 13. This can be done by measuring the deformation of the balls and/or rollers 13, using for instance a capacitive measuring device.

The measurement device is preferably provided with transmission means, for transmitting the measured data to the outside world. This can be a wireless transmission link, but also wired solutions are known, to transmit data from a rotating element to the outside world, as will be known to a person skilled in the art.

The measurement device 6 can measure the capacitance using all kinds of known measurement techniques. The measurement device 6 may for instance use a LC-circuit. A frequency sweep may then be used to determine the resonance frequency and, subsequently, the value of the capacitance C (L is known).

For the purpose of teaching the invention, preferred embodiments of the method and devices of the invention are described above. It will be apparent for the person skilled in the art that other alternative and equivalent embodiments of the invention can be conceived and reduced to practice without departing from the true spirit of the invention, the scope of the invention being only limited by the annexed claims.

**Claims**

1. Method for determining the thickness of a lubrication film (5, 15) in a bearing by measuring a capacitance (C), where the lubrication film (5, 15) is provided between a first member (2, 12) and a plurality of bearing roller elements (3, 13) and between a second member (4, 14) and the plurality of bearing roller elements (3, 13), the first member (2, 12) and the second member (4, 14) being movable with respect to each other, **characterised in that** the capacitance (C) is measured between a first measurement node on a first of the plurality of bearing roller elements (3a, 13a) and a second measurement node on a further one of the plurality of bearing roller elements (3b, 13b).

2. Method according to claim 1, in which the first bearing roller element (3a, 13a) and the further bearing roller element (3b, 13b) are coaxially aligned, mechanically coupled and electrically isolated with respect to each other.

3. Method according to any one of the claims 1-2, in which the capacitance is measured using sliding contacts for making contact with the first and second measurement nodes.

4. Method according to claim 3, in which the capacitance is only measured during time periods in which the sliding contacts are in actual electrical connection with the first and second measurement node.

5. Method according to any of the preceding claims, in which an inductance L is connected between the first and second measurement nodes, and the capacitance is measured using an electromagnetic oscillating field.

6. Apparatus for determining the thickness of a lubrication film (5,15) in a bearing by measuring a capacitance (C), where the lubrication film (5, 15) is provided between a first member (2, 12) and a plurality of bearing roller elements (3, 13) and between a second member (4, 14) and the plurality of bearing roller elements (3, 13), the first member (2, 12) and the second member (4, 14) being movable with respect to each other, **characterised in that** the apparatus comprises a measuring device for measuring the capacitance (C) between a first measurement node on a first of the plurality of bearing roller elements (3a, 13a) and a second measurement node on a further one of the plurality of bearing roller elements (3b, 13b).

7. Apparatus according to claim 6, in which the first bearing roller element (3a, 13a) and the further bearing roller element (3b, 13b) are coaxially aligned, mechanically coupled and electrically isolated with respect to each other.

8. Apparatus according to any of the claims 6 - 7, in which the apparatus comprises sliding contacts for making contact between the measurement apparatus and the first and second measurement nodes.

9. Apparatus according to claim 8, in which the measurement device only measures the capacitance during time periods in which the sliding contacts are in actual electrical connection with the first and second measurement node.

10. Apparatus according to any of the claims 6 - 9, in which the apparatus further comprises an inductance L connected between the first and second measurement nodes, and the measurement device uses an electromagnetic oscillating field for measuring the capacitance.

11. Apparatus according to any of the claims 6-10, where the apparatus is further provided with a power supply, for energizing the measuring device.

12. Apparatus according to any of the claims 6-11, where the measurement device is provided with transmission means, for transmitting the measured data.

**Patentansprüche**

1. Verfahren zum Bestimmen der Dicke eines Schmierfilmes (5, 15) in einem Lager durch Messung einer Kapazität (C), wobei der Schmierfilm (5, 15) zwischen einem ersten Element (2, 12) und einer Vielzahl von Lagerwälzkörper-Elementen (3, 13) und zwischen einem zweiten Element (4, 14) und der Vielzahl von Lagerwälzkörper-Elementen (3, 13) angeordnet ist, wobei das erste Element (2, 12) und das zweite Element (4, 14) relativ zueinander beweglich sind, **dadurch gekennzeichnet, dass** die Kapazität (C) zwischen einem ersten Messknoten an einem ersten der Vielzahl der Lagerwälzkörper-Elemente (3a, 13a) und einem zweiten Messknoten an einem weiteren der Vielzahl der Lagerwälzkörper-Elemente (3b, 13b) gemessen wird.

2. Verfahren nach Anspruch 1, **dadurch gekennzeichnet, dass** das erste Lagerwälzkörper-Element (3a, 13a) und das weitere Lagerwälzkörper-Element (3b, 13b) relativ zueinander koaxial ausgerichtet, mechanisch gekoppelt und elektrisch isoliert sind.

3. Verfahren nach einem der Ansprüche 1 bis 2, **dadurch gekennzeichnet, dass** die Kapazität durch Nutzung von Schleifkontakten gemessen wird, um Kontakt mit dem ersten und dem zweiten Messknoten herzustellen.

4. Verfahren nach Anspruch 3, **dadurch gekennzeichnet, dass** die Kapazität nur während Zeitperioden gemessen wird, in denen die Schleifkontakte in tatsächlicher elektrischer Verbindung mit dem ersten und dem zweiten Messknoten sind.

5. Verfahren nach einem der vorangehenden Ansprüche, **dadurch gekennzeichnet, dass** eine Induktivität (L) zwischen dem ersten und zweiten Messknoten geschaltet ist und die Kapazität unter Nutzung eines elektromagnetischen oszillierenden Feldes gemessen wird.

6. Vorrichtung zum Bestimmen der Dicke eines Schmierfilmes (5, 15) in einem Lager durch Messung einer Kapazität (C), wobei der Schmierfilm (5, 15) zwischen einem ersten Element (2, 12) und einer Vielzahl von Lagerwälzkörper-Elementen (3, 13) und zwischen einem zweiten Element (4, 14) und der Vielzahl von Lagerwälzkörper-Elementen (3, 13) angeordnet ist, wobei das erste Element (2, 12) und das zweite Element (4, 14) relativ zueinander beweglich sind,
**dadurch gekennzeichnet,**
**dass** die Vorrichtung eine Messvorrichtung für die Messung der Kapazität (C) zwischen einem ersten Messknoten an einem ersten der Vielzahl der Lagerwälzkörper-Elemente (3a, 13a) und einem zweiten Messknoten an einem weiteren der Vielzahl der Lagerwälzkörper-Elemente (3b, 13b) aufweist.

7. Vorrichtung nach Anspruch 6, **dadurch gekennzeichnet, dass** das erste Lagerwälzkörper-Element (3a, 13a) und das weitere Lagerwälzkörper-Element (3b, 13b) relativ zueinander koaxial ausgerichtet, mechanisch gekoppelt und elektrisch isoliert sind.

8. Vorrichtung nach einem der Ansprüche 6 bis 7, **dadurch gekennzeichnet, dass** die Vorrichtung Schleifkontakte aufweist, um Kontakt zwischen der Messvorrichtung und dem ersten und zweiten Messknoten herzustellen.

9. Vorrichtung nach Anspruch 8, **dadurch gekennzeichnet, dass** die Messvorrichtung die Kapazität nur während Zeitperioden misst, in denen die Schleifkontakte in tatsächlicher elektrischer Verbindung mit dem ersten und dem zweiten Messknoten sind.

10. Vorrichtung nach einem der Ansprüche 6 bis 9, **dadurch gekennzeichnet, dass** die Vorrichtung weiterhin eine Induktivität (L) aufweist, die zwischen dem ersten und zweiten Messknoten geschaltet ist, und die Messvorrichtung ein elektromagnetisches oszillierendes Feld zur Messung der Kapazität nutzt.

11. Vorrichtung nach einem der Ansprüche 6 bis 10, **dadurch gekennzeichnet, dass** die Vorrichtung weiterhin mit einer Energieversorgung ausgestattet ist, um die Messvorrichtung zu betreiben.

12. Vorrichtung nach einem der Ansprüche 6 bis 11, **dadurch gekennzeichnet, dass** die Messvorrichtung mit Übertragungsmitteln zur Übertragung der gemessenen Daten ausgestattet ist.

## Revendications

1. Procédé pour déterminer l'épaisseur d'un film lubrifiant (5, 15) dans un roulement par la mesure d'une capacité (C), le film lubrifiant (5, 15) étant prévu entre un premier organe (2, 12) et une pluralité d'éléments roulants de roulement (3, 13) et entre un deuxième organe (4, 14) et la pluralité d'éléments roulants de roulement (3, 13), le premier organe (2, 12) et le deuxième organe (4, 14) étant mobiles l'un par rapport à l'autre, **caractérisé en ce que**
la capacité (C) est mesurée entre un premier noeud de mesure sur un premier des éléments roulants de roulement (3a, 13a) et un deuxième noeud de mesure sur un autre desdits éléments roulants de roulement (3b, 13b).

2. Procédé selon la revendication 1, dans lequel le premier élément roulant de roulement (3a, 13a) et l'autre élément roulant de roulement (3b, 13b) sont alignés de manière coaxiale, accouplés mécaniquement et isolés électriquement l'un par rapport à l'autre.

3. Procédé selon l'une quelconque des revendications 1 à 2, dans lequel la capacité est mesurée en employant des contacts glissants pour établir un contact avec les premier et deuxième noeuds de mesure.

4. Procédé selon la revendication 3, dans lequel la capacité n'est mesurée que pendant des périodes durant lesquelles les contacts glissants sont en connexion électrique réelle avec les premier et deuxième noeuds de mesure.

**5.** Procédé selon l'une quelconque des revendications précédentes, dans lequel une inductance L est connectée entre les premier et deuxième noeuds de mesure, et la capacité est mesurée en utilisant un champ oscillant électromagnétique.

**6.** Appareil pour déterminer l'épaisseur d'un film lubrifiant (5, 15) dans un roulement par la mesure d'une capacité (C), le film lubrifiant (5, 15) étant prévu entre un premier organe (2, 12) et une pluralité d'éléments roulants de roulement (3, 13) et entre un deuxième organe (4, 14) et la pluralité d'éléments roulants de roulement (3, 13), le premier organe (2, 12) et le deuxième organe (4, 14) étant mobiles l'un par rapport à l'autre, **caractérisé en ce que** l'appareil comprend un dispositif de mesure pour mesurer la capacité (C) entre un premier noeud de mesure sur un premier des éléments roulants de roulement (3a, 13a) et un deuxième noeud de mesure sur un autre desdits éléments roulants de roulement (3b, 13b).

**7.** Appareil selon la revendication 6, dans lequel le premier élément roulant de roulement (3a, 13a) et l'autre élément roulant de roulement (3b, 13b) sont alignés de manière coaxiale, accouplés mécaniquement et isolés électriquement l'un par rapport à l'autre.

**8.** Appareil selon l'une quelconque des revendications 6 à 7, dans lequel l'appareil comprend des contacts glissants pour établir un contact entre l'appareil de mesure et les premier et deuxième noeuds de mesure.

**9.** Appareil selon la revendication 8, dans lequel le dispositif de mesure ne mesure la capacité que pendant des périodes durant lesquelles les contacts glissants sont en connexion électrique réelle avec les premier et deuxième noeuds de mesure.

**10.** Appareil selon l'une quelconque des revendications 6 à 9, dans lequel l'appareil comprend en outre une inductance L connectée entre les premier et deuxième noeuds de mesure, et le dispositif de mesure utilise un champ oscillant électromagnétique pour mesurer la capacité.

**11.** Appareil selon l'une quelconque des revendications 6 à 10, dans lequel l'appareil est en outre pourvu d'une alimentation, pour alimenter en énergie le dispositif de mesure.

**12.** Appareil selon l'une quelconque des revendications 6 à 11, dans lequel le dispositif de mesure est pourvu d'un moyen de transmission, pour transmettre les données mesurées.

## Fig 1a

## Fig 1b

Fig 2a

Fig 2b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0021524 A1